# DEMANDE DE BREVET EUROPEEN

(11) **EP 1 614 609 A1**
(43) Date de publication de la demande: **11.01.2006**
(21) Numéro de dépôt: 05291475.1
(22) Date de dépôt: 07.07.2005
(51) Int. Cl.: B62D 25/08

(54) **Palier d'essuie-glace escamotable sous un choc**

(30) Priorité: 09.07.2004 FR 0407692
(71) Demandeur: Peugeot Citroen Automobiles S.A., 78140 Vélizy Villacoublay (FR)
(72) Inventeur: Jeuffe, Gérard, 78810 Feucherolles (FR)
(74) Mandataire: Le Forestier, Eric

(57) **Abrégé**

L'invention concerne un palier d'essuie-glace comprenant :
- un arbre (5) avec une extrémité proximale (53) et une extrémité distale (51) à laquelle est fixé un bras d'essuie-glace,
- un support (7) fixé à la carrosserie du véhicule, dans lequel ledit arbre est monté en rotation,
caractérisé en ce que :
- l'arbre (5) est entouré par ledit support (7) sur sensiblement toute sa longueur,
- l'arbre (5) présente une section d'un premier diamètre sur une première portion (52) de longueur prédéterminée s'étendant depuis son extrémité proximale (53) et une section d'un deuxième diamètre, supérieur au premier, s'étendant sur une deuxième portion (54) de longueur prédéterminée s'étendant entre la première portion et l'extrémité distale (51) de l'arbre, une première zone de faiblesse (55) étant prévue entre les première et deuxième portions,
- le support (7) présente une section d'un troisième diamètre, supérieur au deuxième, sur une troisième portion (71) de longueur prédéterminée s'étendant depuis l'extrémité proximale du support et une section d'un quatrième diamètre, inférieur au troisième et supérieur au deuxième, sur une quatrième portion (73) de longueur prédéterminée s'étendant entre ladite troisième portion (71) et l'extrémité distale (74) du support, une deuxième zone de faiblesse (75) étant prévue entre les troisième et quatrième portions (71, 73),
et en ce que, lorsqu'une force est appliquée sur l'arbre (5) en direction de son extrémité proximale (53), supérieure à un seuil prédéterminé, une rupture se produit entre les première et deuxième portions (52, 54), respectivement entre les troisième et quatrième portions (71, 73), au niveau de la première zone de faiblesse (55), respectivement la deuxième (75), de telle sorte que les deuxième et quatrième portions (54, 73) se déplacent vers l'extrémité proximale (53) de l'arbre, entre la première et la troisième portions (54, 71).

## Description

L'invention concerne le palier d'un essuie-glace d'un véhicule automobile.

Un tel palier comprend généralement un arbre à l'extrémité duquel est relié un bras d'essuie-glace. Cet arbre est, à son autre extrémité, fixé à la carrosserie du véhicule.

On a pu constater que, lors d'un accident survenant entre un véhicule et un piéton, la tête du piéton est susceptible de venir violemment en contact avec l'extrémité du palier supportant le bras d'essuie-glace. Ceci rend les blessures du piéton encore plus sérieuses.

C'est pourquoi, on a recherché des structures de palier permettant d'absorber l'effort dû au choc de la tête du piéton sur le palier et ainsi, de limiter ses blessures.

Ainsi, le document EP-1 103 434 décrit un palier d'essuie-glace qui comporte un arbre monté en pivotement dans un support fixé à la carrosserie du véhicule. Une partie de l'arbre s'étendant librement hors du support, jusqu'à une extrémité distale à laquelle est fixée un bras d'essuie-glace. Tout mouvement axial de l'arbre est empêché, tant qu'une force appliquée selon l'axe de l'arbre n'excède pas 2100 N. Par contre, en présence d'une force supérieure, l'arbre peut s'enfoncer axialement et pénétrer à l'intérieur de la carrosserie pour absorber cette force.

Le déplacement axial maximal de l'arbre correspond à la distance entre l'extrémité distale de l'arbre et l'extrémité libre du support de l'arbre. Ainsi, pour pouvoir absorber l'effort se produisant lors d'un accident, il faut prévoir une distance importante, ce qui entraîne un porte-à-faux également important. Il en résulte des risques de mauvais guidage de l'arbre dans son support, voire de rupture de l'arbre ou du support.

De surcroît, la pénétration de l'arbre dans la carrosserie nécessite de prévoir un espace à cet effet, ce qui complique sa réalisation.

Le document JP-11 165613 décrit un palier d'essuie-glace comportant un arbre monté également en rotation dans un support fixé à la carrosserie du véhicule. En fonctionnement normal, seule une courte longueur de l'arbre pénètre dans le support. En cas de choc, l'arbre pénètre complètement dans le support.

Cette disposition permet d'éviter que l'arbre ne s'étende hors du support lors d'un choc et ne s'enfonce dans la carrosserie.

Cependant, là encore, l'absorption de la force axiale en cas de choc dépend de la longueur de l'arbre située hors de son support. Les risques de mauvais guidage ou de rupture sont ici d'autant plus importants que, seule, une courte partie de l'arbre est présente dans le support lorsque le choc intervient.

L'invention a pour objet de pallier ces inconvénients en proposant un palier d'essuie-glace, susceptible d'absorber les forces dues à un choc avec un piéton grâce à un effacement de son arbre et ceci, avec une grande sécurité de fonctionnement et sans nécessiter une conception particulière de la carrosserie.

Ainsi, l'invention a pour objet un palier d'essuie-glace comprenant un arbre avec une extrémité proximale et une extrémité distale à laquelle est fixé un bras d'essuie-glace, et un support fixé à la carrosserie du véhicule, dans lequel ledit arbre est monté en rotation.

Selon l'invention, l'arbre est entouré par ledit support sur sensiblement toute sa longueur et il présente une section d'un premier diamètre sur une première portion de longueur prédéterminée s'étendant depuis son extrémité proximale et une section d'un deuxième diamètre, supérieur au premier, s'étendant sur une deuxième portion de longueur prédéterminée s'étendant entre la première portion et l'extrémité distale de l'arbre, une première zone de faiblesse étant prévue entre les première et deuxième portions.

Par ailleurs, le support présente une section d'un troisième diamètre, supérieur au deuxième, sur une troisième section de longueur prédéterminée s'étendant depuis l'extrémité proximale du support et une section d'un quatrième diamètre, inférieur au troisième et supérieur au deuxième, sur une quatrième portion de longueur prédéterminée s'étendant entre ladite troisième portion et l'extrémité distale du support, une deuxième zone de faiblesse étant prévue entre les troisième et quatrième portions.

Lorsqu'une force est appliquée sur l'arbre en direction de son extrémité proximale, supérieure à un seuil prédéterminé, une rupture se produit entre les première et deuxième portions, respectivement entre les troisième et quatrième portions, au niveau de la première zone de faiblesse, respectivement la deuxième, de telle sorte que les deuxième et quatrième portions se déplacent vers l'extrémité proximale de l'arbre, entre la première et la troisième portions.

Ainsi, lors d'un choc, les deuxièmes et quatrième portions s'escamotent dans le reste du support, la longueur de ces deux portions permettant d'absorber les efforts dus à ce choc, sans risque de mauvais fonctionnement. En effet, le support entourant l'arbre sur sensiblement toute sa longueur, il n'existe aucun risque de porte-à-faux et donc, de mauvais guidage ou de rupture non désirée de l'arbre.

De façon préférée, des moyens sont prévus pour limiter le déplacement axial des deuxième et quatrième portions, lors d'un choc.

Ceci permet d'éviter que le palier ne se déplace à l'intérieur du véhicule, même sous l'effet d'un choc très important, ce qui très avantageux dans un environnement confiné.

De façon avantageuse, les première et deuxième zones de faiblesse sont situées sensiblement au même niveau.

Cette disposition particulière assure un guidage optimisé des deuxième et quatrième portions dans le reste du support.

De façon classique, le seuil est d'environ 2100 N.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 est une vue en coupe schématique d'un palier d'essuie-glace selon l'invention, dans l'environnement d'un véhicule automobile
- la figure 2 est une vue en coupe du palier de la figure 1, agrandie
- la figure 3 est une vue en coupe schématique du palier de la figure 1, après un choc et
- la figure 4 est une vue en coupe et agrandie du palier de la figure 3.

Les éléments communs aux quatre figures seront désignés par les mêmes références.

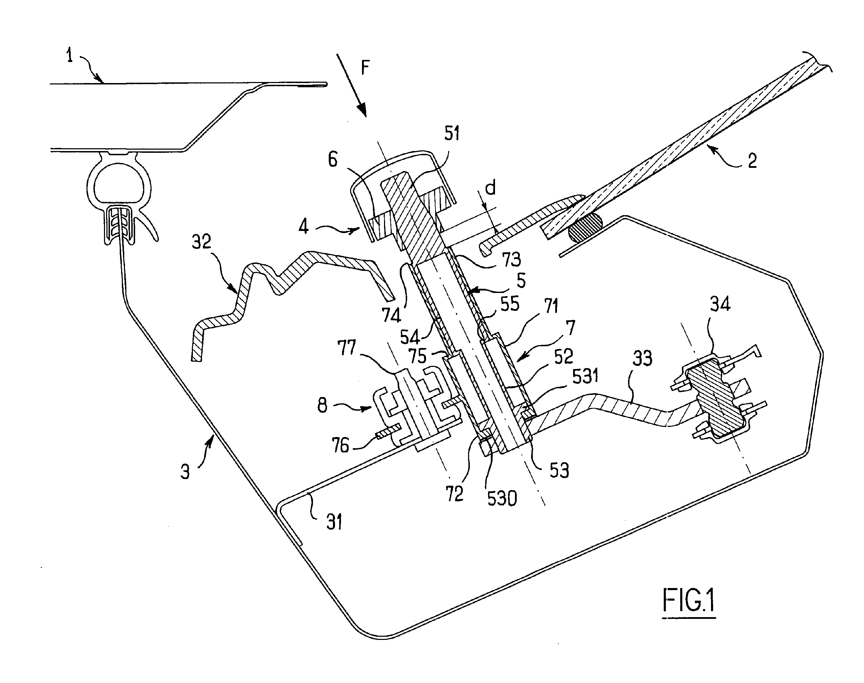

Ainsi, la figure 1 illustre un palier d'essuie-glace selon l'invention fixé à l'intérieur d'un véhicule.

De façon plus précise, ce palier d'essuie-glace est disposé dans un espace délimité par le capot 1 du véhicule, le pare-brise 2, ainsi que l'auvent 3 formé à l'intérieur de la carrosserie.

Le palier d'essuie-glace 4 comporte un arbre 5 à l'extrémité distale 51 duquel est fixé un bras d'essuie-glace (non représenté) par l'intermédiaire d'un entraîneur 6.

Le palier d'essuie-glace comporte également un support 7, dans lequel l'arbre 5 est monté en rotation.

De façon classique, l'entraîneur 6 convertit le mouvement de rotation de l'arbre 5 en un mouvement de balancier du bras de l'essuie-glace.

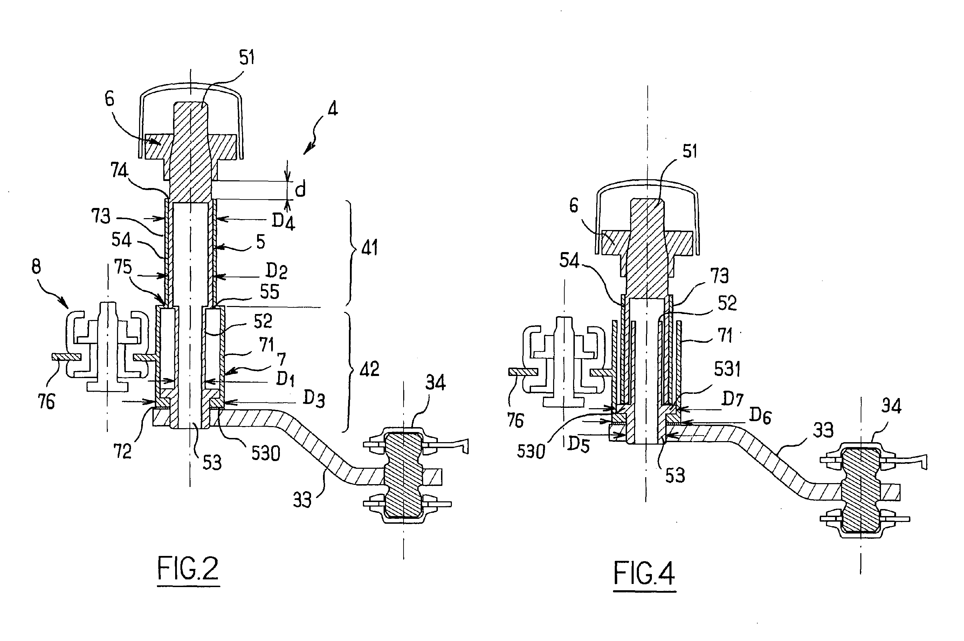

Comme l'illustre plus précisément la figure 2, l'arbre 5 présente une section d'un premier diamètre D1 sur une première portion 52 de longueur prédéterminée.

Cette première portion 52 s'étend depuis l'extrémité proximale 53 de l'arbre 5.

Celui-ci comprend également une section d'un deuxième diamètre D2 supérieur à D1, cette deuxième section s'étendant sur une deuxième portion 54 de longueur prédéterminée. Cette deuxième portion 54 s'étend entre la première portion 52 et l'extrémité distale 51 de l'arbre.

Une première zone de faiblesse 55 est prévue au niveau du raccordement entre les première et deuxième portions 52, 54.

Le support 7 comporte, quant à lui, une section d'un troisième diamètre D3 supérieur à D2, sur une troisième portion 71 de longueur prédéterminée.

Cette troisième portion 71 s'étend depuis l'extrémité proximale 72 du support.

Celui-ci comporte également une section d'un quatrième diamètre D4, inférieur à D3 et supérieur à D2, sur une quatrième portion 73 de longueur prédéterminée s'étendant entre la première portion 71 et l'extrémité distale 74 du support.

Par ailleurs, une deuxième zone de faiblesse 75 est prévue entre les troisième et quatrième portions 71 et 73.

Dans l'exemple illustré aux figures 1 et 2, les première et deuxième zones de faiblesse 55 et 75 sont situées sensiblement au même niveau. Ceci permet d'obtenir un meilleur guidage linéaire entre la portion 54 de l'arbre, de diamètre D2, et la portion 73 du support 7, de diamètre D4.

Cependant, l'invention n'est pas limitée à ce mode de réalisation et les deux zones de faiblesse pourraient être légèrement décalées.

Par ailleurs, l'arbre 5 est entouré par le support sur sensiblement toute sa longueur.

Ainsi, la distance d située entre l'extrémité distale 74 du support 7 et l'entraîneur 6 est relativement faible. Cette distance d est typiquement inférieure à 10 mm.

Grâce à la disposition particulière du palier et du support, il n'existe aucun porte-à-faux entre ces deux pièces.

Le support 7 comporte, dans sa portion 71, une bride 76 réalisée d'une pièce avec la portion 71.

Cette bride est percée, dans sa partie centrale, d'un trou circulaire ou oblong qui débouche à l'extérieur de manière à pouvoir monter un élément 8 sur la bride et le fixer ensuite sur une pièce 31 reliée à l'auvent 3, au moyen d'une vis 77.

L'élément 8 est ainsi positionné entre la pièce 31, le palier 4, la grille 32 de l'auvent et l'auvent lui-même.

L'extrémité proximale 53 de l'arbre 5 est fixée à une manivelle 33 qui assure la liaison avec le moteur 34 assurant la rotation de l'arbre 5 et faisant donc partie du mécanisme d'essuie-glace.

Cette extrémité proximale 53 présente une section d'un diamètre D5 plus important que le premier diamètre D1. Elle comporte une première bride 530 et elle se termine au niveau de la première portion 52 par une deuxième bride 531. Les diamètres extérieurs D6 et D7 des deux brides 530 et 531 sont tous les deux supérieurs ou égaux à D4.

Selon le mode de réalisation illustré sur ies figures, l'extrémité proximale 72 du support 7 est disposée entre les deux brides 530 et 531.

Ainsi, en fonctionnement normal, c'est-à-dire lorsque aucune force n'est appliquée sur le palier, l'arbre 5 pivote dans le palier 7 et le bras de l'essuie-glace fait des mouvements de va-et-vient, de façon à nettoyer la surface du pare-brise 2. Par contre, aucun mouvement axial de l'arbre 5 n'est possible car d'une part, la manivelle 33 vient en appui sur la bride 530 et d'autre part, un clip en appui sur la portion 73 du support au niveau de l'extrémité distale 74, enserre l'arbre 5 et bloque sa translation axiale.

Lors d'un accident impliquant un piéton, une force F s'applique sur le palier, selon l'axe de l'arbre 5.

Cette force F peut, en pratique, être la composante axiale d'une force orientée différemment.

Si la valeur de cette force F dépasse un seuil prédéterminé, les zones de faiblesse 55 et 75 se rompent.

Cette valeur de seuil est typiquement d'environ 2100 N.

Du fait de cette rupture, les deuxième et quatrième portions 54 et 73 se déplacent axialement, sous l'effet de la force F et en direction de l'extrémité proximale 53 de l'arbre 5.

En pratique, la portion 54 de l'arbre et la portion 73 du support coulissent entre la portion 52 de l'arbre et la portion 71 du support.

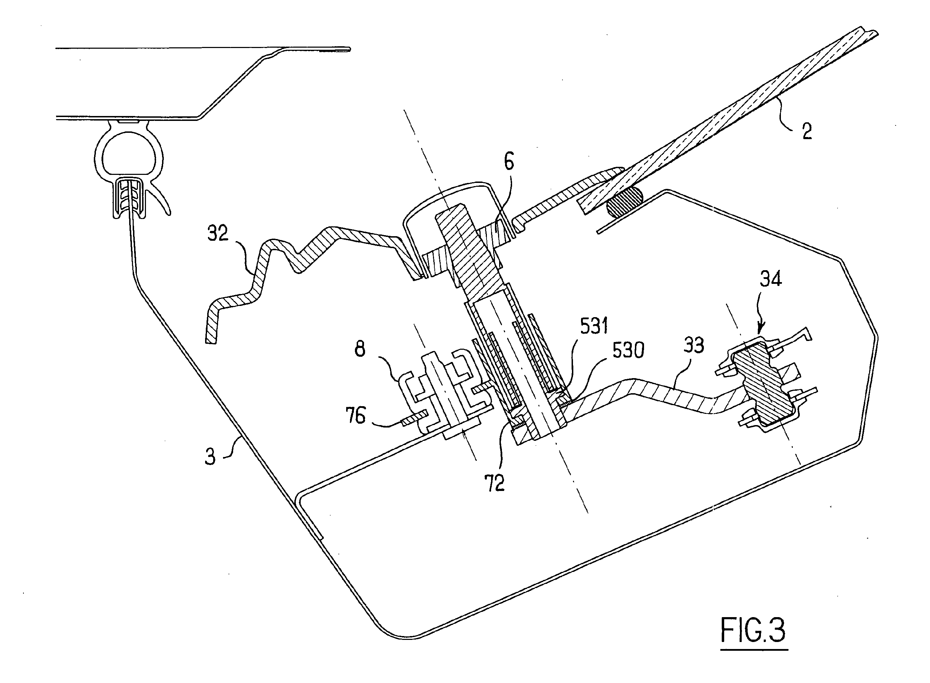

Les figures 3 et 4 illustrent le palier 4 après le choc.

Les deuxième et quatrième portions 54 et 73 sont en appui sur la bride 531 de l'extrémité distale 53 de l'arbre et sont escamotées entre les première et troisième portions 52 et 71.

La bride 531 permet de bloquer le mouvement axial des deuxième et quatrième portions 54 et 73.

La distance entre la bride 531 et la deuxième zone de faiblesse 75 du support 7 détermine la distance maximale sur laquelle les deuxième et quatrième portions 54 et 73 peuvent se déplacer axialement.

C'est pourquoi, cette distance est choisie de façon appropriée pour permettre l'absoption effective de la force F.

La bride 531 permet de limiter le déplacement axial des deuxième et quatrième portions dans le reste du support et permet à l'auvent 3 du véhicule de rester intact après un choc.

La liaison entre l'extrémité proximale 53 de l'arbre et la manivelle 33 permet d'éviter que le palier ne se déplace à l'intérieur du véhicule. Ceci limite l'encombrement de l'ensemble du dispositif, ce qui est utile pour l'économie globale du véhicule.

Par ailleurs, le choix particulier des diamètres des différentes portions constitutives du support et de l'arbre assure un guidage précis des deuxième et quatrième portions entre les première et troisième portions. Ainsi, l'escamotage de l'étage supérieur 41 du palier dans l'étage inférieur 42, lors d'un choc, s'effectue avec une grande sécurité de fonctionnement.

On peut également noter que le support 31 du mécanisme d'essuie-glace reste intact après un choc.

Les signes de référence insérés après les caractéristiques techniques figurant dans les revendications ont pour seul but de faciliter la compréhension de ces dernières et ne sauraient en limiter la portée.

## Revendications

1. Palier d'essuie-glace comprenant :
- un arbre (5) avec une extrémité proximale (53) et une extrémité distale (51) à laquelle est fixé un bras d'essuie-glace,
- un support (7) fixé à la carrosserie du véhicule, dans lequel ledit arbre est monté en rotation,
**caractérisé en ce que** :
- l'arbre (5) est entouré par ledit support (7) sur sensiblement toute sa longueur,
- l'arbre (5) présente une section d'un premier diamètre sur une première portion (52) de longueur prédéterminée s'étendant depuis son extrémité proximale (53) et une section d'un deuxième diamètre, supérieur au premier, s'étendant sur une deuxième portion (54) de longueur prédéterminée s'étendant entre la première portion et l'extrémité distale (51) de l'arbre, une première zone de faiblesse (55) étant prévue entre les première et deuxième portions,
- le support (7) présente une section d'un troisième diamètre, supérieur au deuxième, sur une troisième portion (71) de longueur prédéterminée s'étendant depuis l'extrémité proximale du support et une section d'un quatrième diamètre, inférieur au troisième et supérieur au deuxième, sur une quatrième portion (73) de longueur prédéterminée s'étendant entre ladite troisième portion (71) et l'extrémité distale (74) du support, une deuxième zone de faiblesse (75) étant prévue entre les troisième et quatrième portions (71, 73),
et **en ce que** , lorsqu'une force est appliquée sur l'arbre (5) en direction de son extrémité proximale (53), supérieure à un seuil prédéterminé, une rupture se produit entre les première et deuxième portions (52, 54), respectivement entre les troisième et quatrième portions (71, 73), au niveau de la première zone de faiblesse (55), respectivement la deuxième (75), de telle sorte que les deuxième et quatrième portions (54, 73) se déplacent vers l'extrémité proximale (53) de l'arbre, entre la première et la troisième portions (54, 71).

2. Palier selon la revendication 1, **caractérisé en ce que** des moyens (530) sont prévus pour limiter le déplacement axial des deuxième et quatrième portions (54, 73), lors d'un choc.

3. Palier selon la revendication 1 ou 2, **caractérisé en ce que** les première et deuxième zones de faiblesse (55, 75) sont situées sensiblement au même niveau.

4. Palier selon l'une des revendications 1 à 3, **caractérisé en ce que** le seuil est d'environ 2100 N.
